# EUROPÄISCHE PATENTSCHRIFT

(11) **EP 1 910 068 B1**
(45) Veröffentlichungstag und Bekanntmachung des Hinweises auf die Patenterteilung: **07.09.2016**
(21) Anmeldenummer: 06776296.3
(22) Anmeldetag: 19.07.2006
(51) Int. Cl.: B30B 15/06, B30B 15/00, B32B 37/06, B30B 7/02, B32B 37/26, C22C 1/02, C22C 21/10, C22C 21/18, C22C 21/14, C22C 21/16, C22C 21/08

(54) **PRESSPAKETAUFBAU ZUM VERPRESSEN VON MULTILAYERN BZW. PRESSE ZUR VERPRESSUNG BZW. HERSTELLUNG VON MULTILAYERN**
PRESS PACKET STRUCTURE FOR PRESSING MULTILAYERS OR PRESS FOR PRESSING OR PRODUCING MULTILAYERS
ENSEMBLE PAQUET DE PRESSE POUR COMPRIMER DES CIRCUITS IMPRIMES MULTICOUCHES, PRESSE POUR COMPRIMER OU PRODUIRE DES CIRCUITS IMPRIMES MULTICOUCHES

(30) Priorität: 20.07.2005 DE 102005034499
(43) Veröffentlichungstag der Anmeldung: 16.04.2008
(73) Patentinhaber: Wickeder Westfalenstahl GmbH, 58739 Wickede / Ruhr (DE)
(72) Erfinder: BACKHAUS, Dieter, 79350 Sexau (DE)
(74) Vertreter: Hübsch, Dirk
(86) Internationale Anmeldenummer: PCT/EP2006/007091
(87) Internationale Veröffentlichungsnummer: WO 2007/009762

(56) Entgegenhaltungen:
- EP-A2- 0 397 979
- EP-A2- 0 785 068
- WO-A-94/17975
- WO-A2-03/004717
- DE-A1- 1 728 139
- DE-A1- 19 717 637
- DE-U1- 7 915 343
- DE-U1- 9 312 309
- FR-A- 822 661
- JP-A- 62 256 617
- US-A- 3 788 211
- US-A- 4 300 280
- US-A1- 2004 151 941
- US-B1- 6 243 946
- US-B1- 6 360 423

## Beschreibung

Die Erfindung betrifft einen Presspaketaufbau gemäß den Merkmalen des Oberbegriffes des Patentanspruches 1. Weiterhin betrifft die Erfindung eine Presse gemäß den Merkmalen des Oberbegriffes des Patentanspruches 25.

Im Stand der Technik sind unterschiedlich ausgebildete Werkzeuge bzw. Paketaufbauten, insbesondere Multilayerpresspakete für die Herstellung von Multilayern vzw. für die Verpressung von mehrlagigen Leiterplatten bekannt. Die Verpressung der Multilayer (Leiterplatten) erfolgt im allgemeinen in Etagenpressen unter Vakuum, wobei hier bei einer Temperatur von ca. 180° Celsius die einzelnen Schichten der Multilayer miteinander entsprechend - verpresst werden.

Im allgemeinen wird hierzu vorher zunächst ein Paketaufbau (Presspaketaufbau) zur Anordnung in einer Presse realisiert. Hierbei werden zwischen zwei Pressenplatten, die als Presswerkzeuge bezeichnet werden sowie zwischen Presspolstern mehrere Multilayer übereinandergelegt, die jeweils durch entsprechende Trennbleche voneinander getrennt sind. Jeder einzelne Multilayer (Mehrlagenschaltung) ist - üblicherweise - mehrlagig aufgebaut, nämlich weist mehrere Innenlagen und Prepreg-Schichten auf, auf die beidseitig eine Kupferfolie auflaminiert wird. Dieser Paketaufbau wird dann in eine Presse eingeschoben.

Bei der Herstellung der Multilayer selbst existieren nun unterschiedlich problematische Bereiche. Einerseits kann es aufgrund der thermischen Ausdehnung der Trennbleche auch zu einer ungünstigen Verschiebung/Bewegung der einzelnen Schichten des Multilayers, also der Prepreg- bzw. der Laminat-Schichten und/oder auch der dazwischen angeordneten Kupferfolien kommen. Andererseits ist auch von Bedeutung, dass mit Hilfe der Trennbleche der Druck innerhalb des Multilayerpresspaketes auch gleichmäßig auf die einzelrien Prepreg- bzw. Laminat-Schichten des Multilayerpresspaketes übertragen werden muss, damit ein optimaler Verbund eines Multilayer hergestellt werden kann und ein Verrutschen der einzelnen Schichten soweit wie möglich verhindert ist.

So zeigt die WO-A-94/17975 einen Paketaufbau, bei dem Multilayerpresspakete zwischen einfachen Platten eingelegt sind. Die die Multilayerpresspakete begrenzenden Platten können konduktiv beheizt werden, nämlich mit Hilfe von elektrischen Schaltungen/angelegten Spannungen, wobei die elektrischen Kontakte direkt an den Platten vorgesehen werden.

Die bekannten Werkzeuge, Paketaufbauten und Multilayerpresspakete sind für die nächste Generation von Leiterplatten (Multilayer), insbesondere für die Fineline-Technologie noch nicht optimal. Die Leiterbahnen werden immer schmaler und gleichzeitig wird auf kleiner werdender Fläche immer mehr unterzu- , bringen sein, insbesondere mit Hilfe der "HDI-High Densitiy Interconnect-Technologie". Da einerseits die zu verwendende Kupferfolie hier immer dünner wird, wobei hier bereits Dicken von kleiner 12 µm oder auch 5 µm genannt werden, erhöht sich zusätzlich damit auch die Gefahr, dass beim Verpressen von Multilayern die Leiterbahnen der Innenlagen sich durch die äußeren Kupferfolien durchdrücken können. Bei diesem sich einstellenden Effekt spricht man vom sogenannten "Imagetransfer". Problematisch hierbei ist ein ungleichmäßiger Dickenabtrag beim Ätzen und entsprechende Ungenauigkeiten beim Bohren. Insbesondere diese extrem dünnen äußeren Kupferfolien können nicht mehr manuell verlegt werden. Sie müssen also vzw. als Verbund mit einem Trenn- oder Pressblech sowie in der DE 198 31 461 C1 beschrieben, hergestellt werden, oder es müssen besondere Trennbleche verwendet werden, die insbesondere bei einer bestimmten Temperatur eine bestimmte Zugfestigkeit bzw. eine bestimmte Dehngrenze aufweisen und vzw. eine zusätzliche Beschichtung, aufweisen.

Beim Verpressen von Multilayern in den üblichen Etagenpressen wird bei den im Stand der Technik bekannten Vorrichtungen die Wärme in den festinstallierten Druckplatten der jeweiligen Presse erzeugt. Hierbei ist derzeit das Verpressen der Multilayer (Mehrlagenschaltung) in Etagenpressen weltweit die führende Technologie. Es wird ca. 95 % des Weltbedarfs auf diese Weise verpresst. In einer oder mehreren übereinanderliegenden Öffnungen einer Etagenpresse werden pro Etage, also pro Einschuböffnung "mehrere Presslinge" in einem sogenannten "Werkzeug" zu einem Paket (Buch) zusammengelegt. Die einzelnen Presslinge werden durch Trennbleche voneinander getrennt, um zu verhindern, dass sich die Innenstruktur durchdrückt und nach dem Erkalten die einzelnen Panels problemlos entstapelt werden können. Hierbei weist jede Etage der Presse eine obere und eine untere Druckplatte auf, die durch extern erhitztes Thermoöl beheizt wird. Anders ausgedrückt innerhalb der oberen und unteren Druckplatte der Presse sind entsprechende Heizkanäle ausgebildet, durch die das extern erhitzte Thermoöl geführt wird, um die obere und untere Druckplatte zu erwärmen. Der gesamte Pressenraum befindet sich in einer Kammer, in der nach Schließen der einzelnen Etagen der Etagenpresse ein Vakuum erzeugt wird. Das über die Kanäle bzw. Bohrungen in der oberen und unteren Druckplatte zirkulierende Thermoöl hat im wesentlichen eine Temperatur von ca. 190° Celsius. Alle Etagen der Etagenpresse haben daher die gleiche Wärmequelle, d. h. es können pro Pressvorgang in allen Etagen der Etagepresse nur Multilayer mit den gleichen Parametern verpresst werden, d. h. insbesondere nämlich bei gleichen Temperaturen.

Bei den im Stand der Technik bekannten Pressen ist die Schichtstruktur im wesentlichen wie folgt: Unter der oberen bzw. über der unteren Druckplatte von ca. jeweils 40 mm Dicke befindet sich eine Polsterung von ca. jeweils 1,7 mm Presspolster-Pappe. Hieran schließen sich jeweils die Werkzeuge an, ein ca. 10 mm dickes Edelstahlblech (Pressenplatte), zwischen denen dann die Trennbleche, vzw. aus Edelstahl von jeweils ca. 1,5 mm Dicke (11 Stück) und die entsprechenden Multilayer angeordnet sind. Im Ergebnis müssen insgesamt ca. 119,9 mm "totes Material" durchwärmt bzw. mit Wärme durchdrungen werden, um letztlich den in der Mitte des Buches liegenden Presslingen die zur Harzumwandlung erforderliche Temperatur von ca. 150° Celsius zuzuführen. Auf grund der schlechten Wärmeleitungsfaktoren der oben beschriebenen Materialien ist dies einerseits sehr energieintensiv, andererseits sehr zeitaufwendig, so dass die Herstellung der entsprechenden Multilayer bzw. Leiterplatten damit sehr kostenintensiv ist. Dies liegt insbesondere an der ungleichmäßigen und unvorteilhaften Wärmeverteilung sowohl in vertikaler als auch in horizontaler Richtung innerhalb des Multilayerpresspaketes.

Der Erfindung liegt daher die Aufgabe zugrunde, einen Presspaketaufbau und/oder eine Presse derart auszugestalten und weiterzubilden, dass die Durchwärmung des Multilayerpresspaketes verbessert, die damit verbundenen Kosten verringert und die Produktivität bzw. Qualität der Produkte erhöht ist.

Die zuvor aufgezeigte Aufgabe ist nun - für den Presspaketaufbau - durch die Merkmale des Patentanspruches 1 gelöst.

Weiterhin ist die zuvor gezeigte Aufgabe - für die Presse - nunmehr durch die Merkmale des Patentanspruches 25 gelöst.

Es ist mindestens ein elektrisch beheizbar ausgebildetes Werkzeug vorgesehen bzw. ein Paketaufbau mit einem derartigen Werkzeug vorgesehen und in der Presse anordenbar, wobei zu dem jeweiligen Heizelement des jeweiligen Werkzeuges mindestens ein elektrischer Kontaktanschluss vorgesehen ist.

Dadurch, dass das Werkzeug zunächst elektrisch beheizbar ausgebildet ist, insbesondere ein elektrisch betreibbares Heizelement vorgesehen ist, insbesondere das Heizelement als Flachheizkörper ausgebildet ist, entstehen entscheidende Vorteile. Einerseits wird nun - nicht mehr wie bisher auch im Stand der Technik - die obere und untere Druckplatte der Presse beheizt. Eine Beheizung durch extern erhitztes Thermoöl entfällt daher. Eine bessere Wärmeverteilung über der Fläche ist mit einem Heizelement, das als Flachheizkörper ausgebildet ist, besonders gut ermöglicht. Damit wird eine gleichmäßige und schnelle Wärmeverteilung in vertikaler und horizontaler Richtung innerhalb des Multilayerpresspaketes erreicht. Insbesondere können auch bereits im Stand der Technik existierende Pressen, insbesondere auch Etagenpressen nunmehr vorteilhaft mit einem erfindungsgemäß ausgestalteten Presspaketaufbau benutzt werden. Hierbei wären bei den bereits existierenden Pressen nur geringe Umbauarbeiten erforderlich, was durch die nachfolgenden Ausführungen noch deutlicher werden wird. Aufgrund der erfindungsgemäßen Anordnung bzw. Schichtstruktur des erfindungsgemäßen Paketaufbaus (Presspaketaufbaus), insbesondere mit der Grundidee der Anordnung eines elektrisch direkt betreibbaren, nämlich beheizbaren Werkzeuges kann nicht nur eine gute Wärmeverteilung in vertikaler und horizontaler Richtung innerhalb des Multilayerpresspaketes erzielt werden, was die Qualität der herzustellenden Multilayer erhöht, sondern die Produktionszeit und damit auch die Arbeitskosten sowie die Energiekosten werden entscheidend verringert. Insbesondere wird die Produktivität entscheidend erhöht, da aufgrund einer erfindungsgemäßen Kombination der Schichtstrukur des Paketaufbaus, die im folgenden noch näher erläutert werden wird, nicht mehr so viel "totes Material" wie bisher durchwärmt werden muss und der "gewonnene Raum" zur Anordnung weiterer Multilayer bzw. Trennbleche und damit zur Erhöhung der Produktivität verwendet werden kann. Im Ergebnis sind daher die im Stand der Technik existierenden Nachteile vermieden und entscheidende Vorteile erzielt.

Es gibt nun eine Vielzahl von Möglichkeiten den erfindungsgemäßen Paketaufbau (Presspaketaufbau) bzw. eine entsprechende Presse in vorteilhafter Art und Weise auszugestalten und weiterzubilden. Hierfür darf zunächst auf die dem Patentanspruch 1 bzw. auf die dem Patentanspruch 25 nachgeordneten Patentansprüche verwiesen werden. Im folgenden sollen nun verschiedene vorteilhafte Ausführungsformen eines erfindungsgemäßen Paketaufbaues (Presspaketaufbaus), und einer Presse anhand der folgenden Zeichnungen und der dazugehörigen Beschreibung näher erläutert werden. In der Zeichnung zeigt:
- Fig. 1a und 1b: in schematischer Darstellung den bisher im Stand der Technik bekannten Aufbau eines Presspaketes bzw. dessen Anordnung in einer Presse,
- Fig. 2a: die Anordnung eines erfindungsgemäßen Paketaufbaus in einer Presse in schematischer Darstellung von der Seite,
- Fig. 2b und 2c: die Anordnung eines erfindungsgemäßen Paketaufbaus in einer Presse in schematischer perspektivischer Darstellung, und
- Fig. 3: in teilweise vergrößerter seitlicher Einzeldarstellung nochmals den erfindungsgemäßen Paketaufbau in schematischer Darstellung von der Seite.

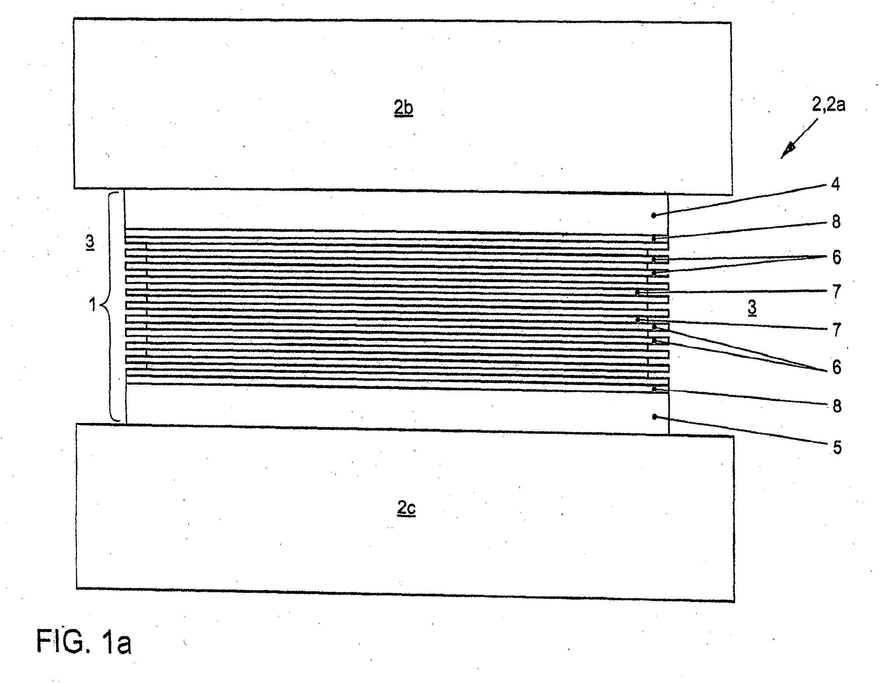

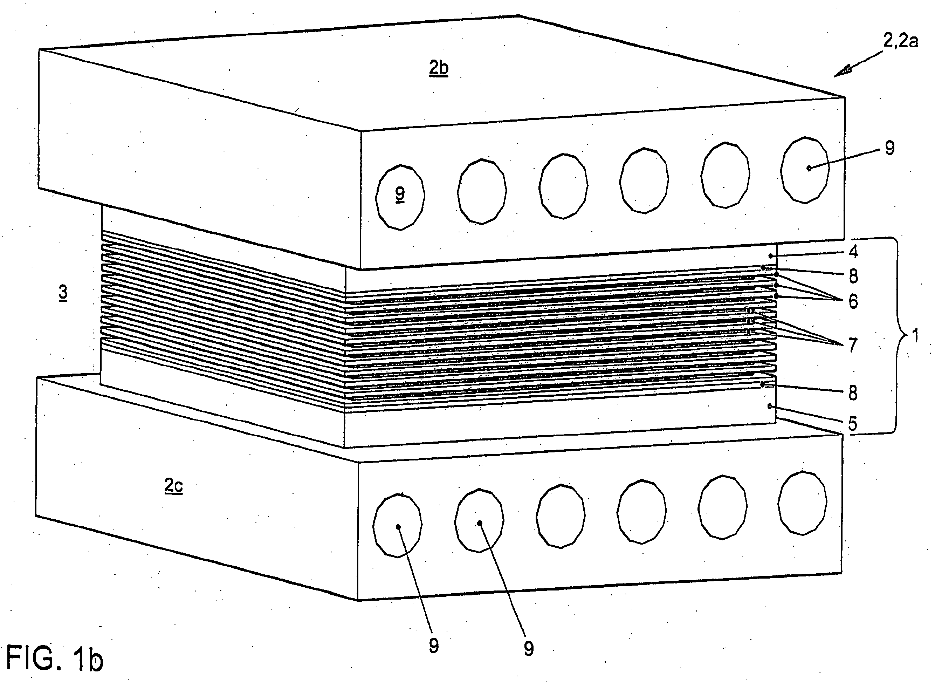

Die Fig. 1a und 1b zeigen, zumindest teilweise von der Seite bzw. zumindest teilweise in perspektivischer Darstellung, schematisch den bisher im Stand der Technik bekannten Aufbau eines Presspaketes, also den Paketaufbau 1 in einer nur teilweise dargestellten Presse 2, hier zum Einschub in die Einschuböffnung 3 einer hier nur teilweisen dargestellten Etagenpresse 2a.

Es ist gut zu erkennen, dass der hier im Stand der Technik bekannte Paketaufbau 1 zwei Werkzeuge 4 und 5, nämlich ein oberes Werkzeug 4 und ein unteres Werkzeug 5 aufweist. Zwischen den Werkzeugen 4 und 5 sind durch entsprechende Trennbleche 6 voneinander getrennt entsprechende Multilayer 7 ange ordnet.

Die Dicke der oberen und unteren Druckplatten 2b und 2c beträgt bei den im Stand der Technik üblicherweise verwendeten Pressen 2 im wesentlichen jeweils ca. 40 mm. Die vzw. aus Edelstahlplatten hergestellen Werkzeuge 4 und 5 weisen im wesentlichen eine Dicke von ca. 10 mm auf. Zwischen den Werkzeugen 4 und 5 und dem jeweils benachbart angeordneten Trennblech 6 ist zusätzlich eine Presspolsterschicht 8 von jeweils 1,7 mm Dicke angeordnet. Zwischen den Presspolsterschichten 8 sind dann 11 Trennbleche 6 und jeweils dazwischenliegende Multilayer 7, insgesamt 10 Multilayer 7 angeordnet. Die Schichtdicke der Trennbleche 6 beträgt im wesentlichen 1,5 mm und die Dicke der Multilayer 1,4 mm. Diese Anordnung ist gut ersichtlich in den Fig. 1a und 1b dargestellt.

Die Fig. 1b zeigt die in den Druckplatten 2b und 2c ausgebildeten Kanäle 9. Durch die Kanäle 9 läuft nun extern erhitztes Thermoöl, so dass die Druckplatten 2b und 2c entsprechend erwärmt werden und - im Endeffekt - der Paketaufbau 1 entsprechend erwärmt wird. Anders ausgedrückt die Druckplatten 2b und 2c werden entsprechend erwärmt und geben die Wärme über die Werkzeuge 4 und 5 und über die Presspolsterschicht 8 an die Trennbleche 6 bzw. die Multilayer 7 weiter, so dass bei den entsprechenden Temperaturen und mit dem entsprechendem Druck hier eine entsprechende Verpressung der Multilayer erfolgen kann. Dies ist soweit im Stand der Technik im wesentlichen bekannt. Die bei der Fig. 1a bzw. 1b durchzudringende Dicke des "toten Materials" beträgt im wesentliche daher 119,9 mm. In der Mitte des Paketaufbaues 1 wird die erforderliche Wärme für die Harzumwandlung von ca. mindestens 150° Celsius erst nach einer bestimmten langen Zeitdauer erreicht. Auch ist die Wärmeverteilung in horizontaler und vertikaler Richtung daher im Stand der Technik nicht optimal, insbesondere auch abhängig von der speziellen Ausbildung der Kanäle 9.

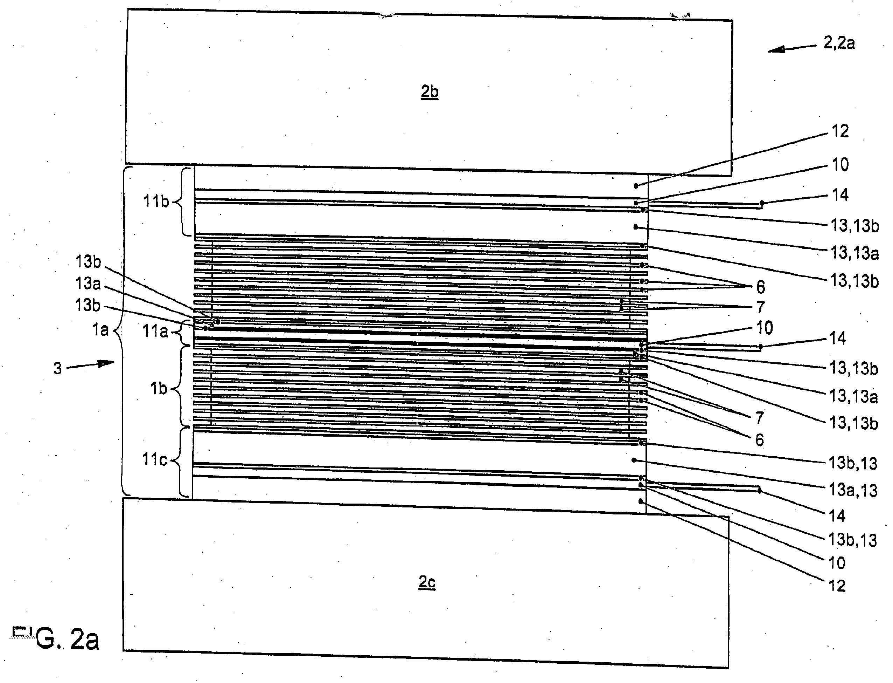

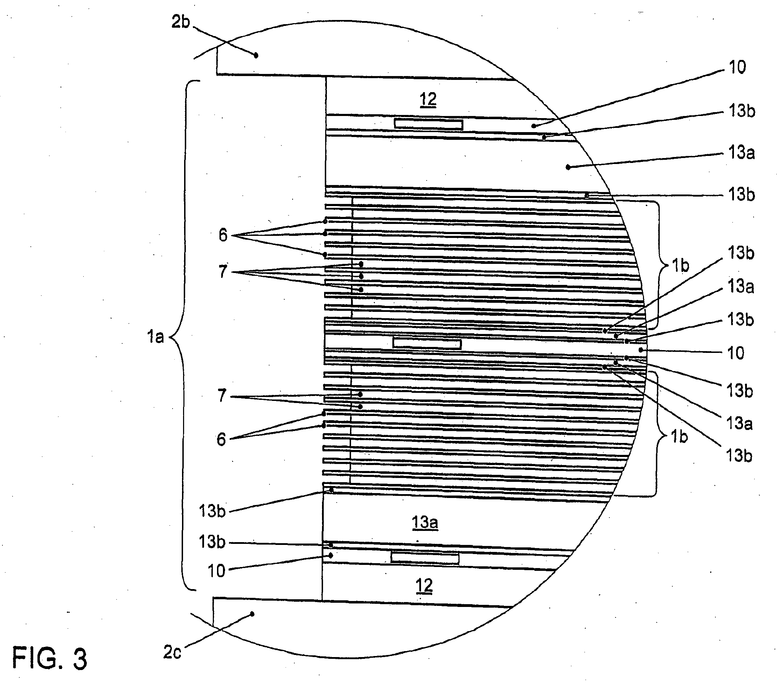

Das Werkzeug ist elektrisch beheizbar ausgebildet, nämlich es ist mindestens ein elektrisch betreibbares Heizelement 10 vorgesehen. Anders ausgedrückt das jeweilige Werkzeug kann nun direkt elektrisch beheizt werden, eine Erwärmung - wie bisher im Stand der Technik auch üblich - durch die Druckplatten 2b bzw. 2c der Presse 2 ist nicht mehr notwendig. Der spezielle Aufbau der Werkzeuge bzw. der erfindungsgemäße Paketaufbau 1a (der Presspakete) wird im folgenden noch ausführlich anhand der Fig. 2a bis 2c bzw. der Fig. 3 erläutert werden.

Die Fig. 2a bis 2c zeigen nun vzw. den erfindungsgemäßen Paketaufbau 1a (Presspaketaufbau 1a) mit den jeweiligen ausgebildeten Werkzeugen 11a, 11b und 11c. Der erfindungsgemäße Paketaufbau 1a (Presspaketaufbau) weist also hier mehrere Werkzeuge 11a, 11b und 11c sowie dazwischenliegend angeordnet zwei Multilayerpresspakete 1b auf. Zunächst sollen die Werkzeuge 11a bis 11c näher erläutert werden:

Die Werkzeuge 11a bis 11c sind hier innerhalb des Paketaufbaus 1a dargestellt bzw. angeordnet und gut erkennbar. Zunächst weist jedes Werkzeug 11a bits 11c mindestens ein elektrisch betreibbares Heizelement 10 auf. Das Heizelement 10 ist zwischen einer Abdeckplatte 12 und einer Wärmeübergangsplatte 13 angeordnet. Dies ist beispielsweise bei den Werkzeugen 11b und 11c so realisiert. Bei dem Werkzeug 11a ist das Heizelement 10 zwischen zwei Wärmeübergangsplatten 13 angeordnet. Die Unterschiede sollen im folgenden noch erläutert werden.

Entscheidend ist aber, dass das jeweilige Werkzeug 11a bis 11c im wesentlichen durch das zwischen der Abdeckplatte 12 und der Wärmeübergangsplatte 13 bzw. durch das zwischen den zwei Wärmeübergangsplatten 13 angeordnete Heizelement 10 als eine zusammenhängende Struktur ausgebildet ist. Die einzelnen Platten bzw. das Heizelement sind über entsprechende Schrauben bzw. Schraubverbindungen, die teilweise in den plattenförmigen Elementen versenkt sind, miteinander verbunden. Die Werkzeuge 11a, 11b bzw. 11c bilden also jeweils eine "Wärmeeinheit".

Die Heizelemente 10 sind als Flachheizkörper ausgebildet. Die Abdeckplatte 12 des jeweiligen Werkzeuges 11b und 11c ist vzw. als Edelstahlplatte ausgebildet. Denkbar ist aber auch die Ausbildung als einfache Stahlplatte.

Vzw. sind die Heizelemente 10 als Mekanit-Flächenheizkörper ausgebildet, wobei jedes Heizelement 10 mindestens einen elektrischen Steckverbindungsanschluss 14 zur Verbindung mit hierzu korrespondierenden Kontakten 15 der Presse 2 aufweist.

Die Wärmeübergangsplatten der Werkzeuge 11a bis 11c sind als Verbundwerkstoffplatten ausgebildet. Hierbei weisen diese Verbundwerkstoffplatten im Inneren einen Aluminiumkern 13a und zwei äußere plattierte Edelstahlschichten 13b auf. Es wird also über die direkte elektrische Beheizung des jeweiligen Werkzeuges 11a bis 11c, also im Endeffekt insbesondere über die Wärmeübergangsplatten 13 die Erwärmung der Trennbleche 6 und der Multilayer 7 realisiert. Die Wärmeübergangsplatten 13 weisen vzw. eine Oberflächenhärte also hier insbesondere die Edelstahlschichten 13b von HRC 30 bis 50 auf. Die Oberfläche der Wärmeübergangsplatten 13. also vzw. die Oberflächen der Edelstahlschichten 13b weisen vzw. eine Rauhigkeit von bis zu 70 µm auf. Die Wärmeleitfähigkeit der Wärmeübergangsplatten 13 beträgt im wesentlichen 200 W/m°K. Durch die Heizelemente 10 wird eine Leistung von bis zu 3,5 W/cm² und eine maximale Temperatur von bis zu 350° Celsius gewährleistet. Die Wärmeübergangsplatten 13 der hier in den Fig. 2a bis 3 dargestellten Werkzeuge 11b und 11c haben im wesentlichen eine Dicke zwischen 4 bis 20 mm, bevorzugt zwischen 6 bis 15 mm, insbesondere von 10 mm. Hierbei ist der Aluminiumkern 13a insgesamt vzw. 8 mm und die plattierten Edelstahlschichten 13b vzw. 1 mm dick.

Die Wärmeübergangsplatten 13 des ersten Werkzeuges 11a sind ebenfalls als Verbundwerkstoffplatten ausgebildet und weisen jeweils eine Gesamtdicke zwischen 1,5 bis 15 mm, vzw. zwischen 3 bis 10 mm, bevorzugt insbesondere von 2,3 mm auf. Hierbei besteht der Aluminiumkern 13a vzw. aus 1,5 mm Dicke und die jeweilige plattierte Edelstahlschicht 13b aus 0,4 mm Edelstahl. Es ist auch denkbar, dass die Wärmeübergangsplatten 13 für die Werkzeuge 11a bis 11c nicht aus Edelstahl, sondern aus einfachem Stahl hergestellt sind. Dies ist abhängig vom jeweiligen Anwendungsfall.

Die Abdeckplatten 12 des zweiten und dritten Werkzeuges 11b und 11c weisen eine Dicke im Bereich zwischen 3 bis 10 mm, bevorzugt zwischen 5 bis 8 mm, insbesondere 6 mm auf. Das Verhältnis bei den Wärmeübergangsplatten 13 von Aluminium zu Stahl/Edelstahl liegt im wesentlichen im Bereich zwischen 50 % zu 50 %, vzw. im Bereich von 60 % zu 40 %, insbesondere von 80 % zu 20 je, jeweils angegeben in Gewichts-%. Der Aluminiumanteil liegt also nun im Bereich von > 50 bis zu max. 80 Gewichts-% zum verbleibenden Stahl-/Edelstahlanteil. Denkbar ist auch, dass die Wärmeübergangsplatten 13. der Werkzeuge 11a bis 11c aus Vollstahl-/Edelstahl bestehen, die oben beschriebene bevorzugte Alternative jedoch besitzt die besseren Wärmeleitfähigkeitskoeffizienten.

Die in den Fig. 2a bis 2c und in der Fig. 3 dargestellte Paketaufbau la zeigt also die hier benutzten drei Werkzeuge 11a bis 11c und die dazwischen angeordneten Multilayerpresspakete 1b, also die entsprechenden Trennbleche 6 und die Multilayer 7.

Es ist zusätzlich ein zweites Werkzeug 11b oben auf ein Multilayerpresspaket 1b und ein drittes Werkzeug 11c unter einem weiteren Multilayerpresspaket 1b jeweils als Abschlusselement des Paketaufbaus 1a angeordnet. Hierdurch wird eine noch bessere Wärmeverteilung innerhalb des Paketaufbaus 1a erzielt.

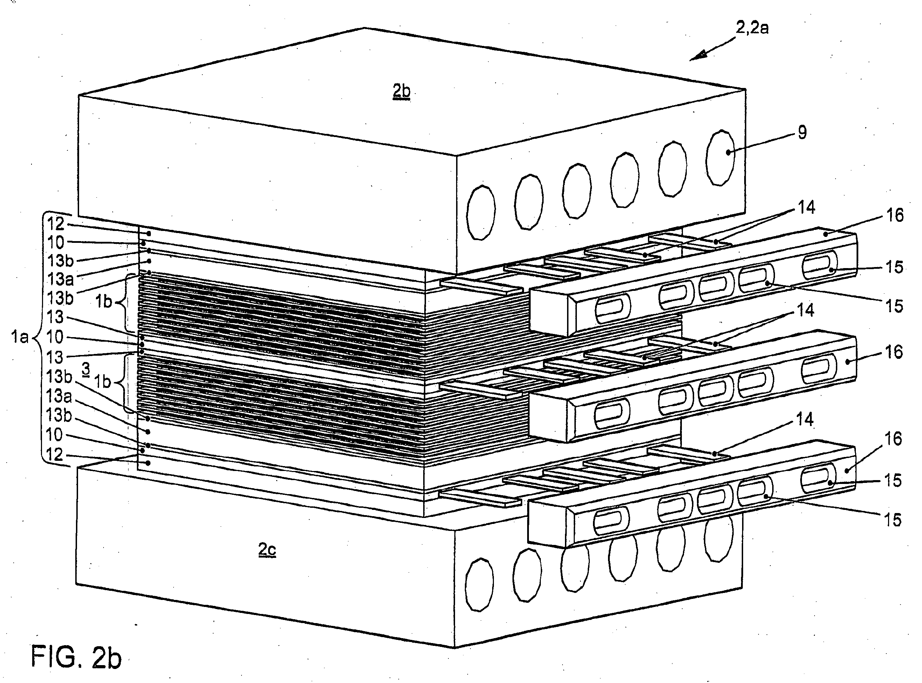

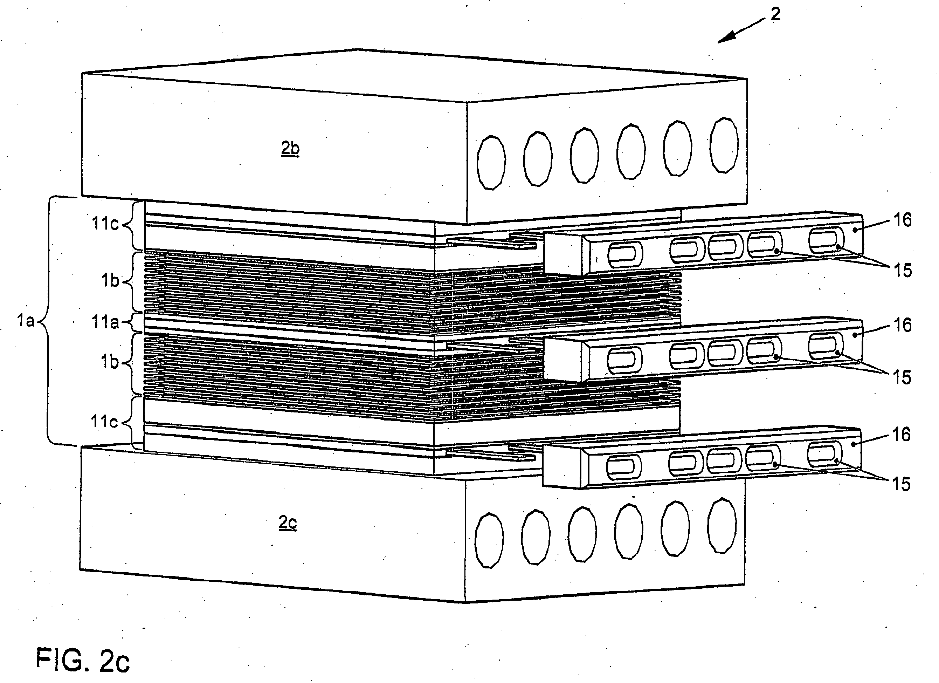

Wie den Fig. 2 bis 3 zu entnehmen ist, ist der Paketaufbau 1a im wesentlichen von oben nach unten schichtenmäßig sequentiell nunmehr wie folgt strukturiert: zunächst obenauf liegt das zweite Werkzeug 11b, dann folgen mehrere durch Trennbleche 6 getrennte Multilayer 7, also ein erstes Multilayerpresspaket 1b, dann das vzw. mittig angeordnete Werkzeug 11a, wiederum mehrere durch Trennbleche 6 getrennte Multilayer 7, also ein zweites Multilayerpresspaket 1b, sowie abschließend - als unteres Abschlusselement - das dritte Werkzeug 11c.

Die hier verwendeten Trennbleche 6 weisen eine Dicke von 0,2 bis 1,5 mm, bevorzugt im Bereich von 0,3 bis 1,0 mm, insbesondere 0,5 mm auf. Die Trennbleche 6 weisen bei einer Temperatur von im wesentlichen 180° Celsius eine Zugfestigkeit von mindestens Rn ≥ 500 MPa und/oder eine Dehngrenze Rp_{0.2} ≥ 470 MPa auf. Zusätzlich können die Trennbleche mit einer organischen, anorganischen oder metallischen Beschichtung versehen werden. Vzw. wird eine organische Beschichtung als Gleitmittel aufgetragen, nämlich ein Gleitmittel, das auf einer Olefin-Basis hergestellt ist. Es ist auch denkbar, dass ein Gleitmittel als ein Polime auf einer Polymer auf einer Poly-Olefin-Basis hergestellt ist.

Für die Verwendung von Trennblechen 6 gibt es im wesentlichen drei Alternativen, vzw. - als erste Alternative, - werden Trennbleche 6 als Stahlbleche, nicht aber als Edelstahlbleche eingesetzt, die im wesentlichen folgende Anteile aufweisen: 0,03 bis 1,2 Gewichts-% C. vzw. 0,03 bis 0,1 Gewichts-% C, 0,2 bis 1,5 Gewichts-% Mn, vzw. 0,2 bis 0,5 Gewichts-% Mn sowie geringe Spuren von Phosphor, Schwefel, Aluminium und/oder Silizium. Hierbei liegt der Wärmeleitfähigkeitskoeffizient im wesentlichen bei 60 W/m°K.

Als - zweite Alternative für die Trennbleche 6 sind Aluminium-Legierungsbleche möglich einzusetzen, deren Anteile sind wie folgt: mindestens 0,25 Gewichts-% Si, mindestens 0,4 Gewichts-% Fe, mindestens 0,05 Gewichts% Mn, zwischen 0,05 bis 5 Gewichts-% Mg, zwischen 0,1 bis 8 Gewichts-% Zn, zwischen 0,1 bis 2 Gewichts-% Cu sowie die restlichen Gewichts-% Al. Derartige Aluminum-Legierungsbleche weisen vzw. eine Zugfestigkeit Rm von 300 bis 680 MPa, vzw. von 680 Mpa auf. Die Streckgrenze, also die Dehngrenze R_{p0.2} entspricht vom Betrag her im wesentlichen 60 bis 80%, vzw. 70% der Jeweiligen Zugfestigkeit Rm. Hierbei liegt der Wärmeleitfähigkeitskoeffizient im wesentlichen bei 210 W/m°K.

Als - dritte Alternative - für die Trennbleche 6 können harteloxierte Alumiumbleche verwendet werden, die eine beidseitige Harteloxierung von mindestens 1 µm Dicke aufweisen. Hierbei liegt der Wärmeleitfähigkeitskoeffizient im wesentlichen bei 210 W/m°K.

Es sind daher - als vierte Alternative - auch Trennbleche 6 denkbar, die als Verbundwerkstoffplatten mit einem Aluminiumkern wie zuvor beschrieben und mit zwei äußeren aufplattierten Stahl- oder Edelstahlschichten ausgeführt sind, also ähnlich dem Wärmeübertragungsplatten 13, wie bereits oben beschrieben. Hierbei liegt der Wärmeleitfähigkeitskoeffizient im wesentlichen bei 200 W/m°K.

Von besonderem Vorteil ist, dass die bereits im Stand der Technik existierenden Pressen 2 leicht umgerüstet werden können. Derartige Pressen 2 werden dann - wie in den Fig. 2 bis 3 dargestellt - mit einem erfindungsgemäßen Paketaufbau 1a bzw. mit den Werkzeugen 11a bis 11b versehen, wobei zu jedem jeweiligen Heizelement 10 mindestens ein elektrischer Kontaktanschluss 15 vorgesehen ist. Da ein Heizelement 10 vzw. mehrere elektrische Verbindungsanschlüsse 14 aufweist sind vzw. die korrespondierenden Kontaktanschlüsse 15 innerhalb einer Kontaktleiste 16 realisiert, wobei die Kontaktleiste 16 an der Rückwand der jeweiligen Einschuböffnung 3 der jeweiligen Presse 2 angeordnet ist.

Denkbar ist auch, dass die Heizelemente 10 nicht als Flachheizkörper, sondern als Heizwendel ausgebildet sind, die am oder innerhalb des jeweiligen Werkzeuges 11a bis 11c angeordnet sind. Auch dies ist abhängig vom jeweiligen Anwendungsfall. Auch hierzu wiederum müssten entsprechende elektrische Steckverbindungen bzw. Kontakte an der jeweiligen Presse vorgesehen sein.

Bei dem hier dargestellten Paketaufbau 1a sind die Abdeckplatten 12 des zweiten und dritten Werkzeuges 11b und 11c vzw. als Edelstahlplatten ausgebildet, wobei diese vzw. auch eine Dicke von 4 mm aufweisen und zwischen der Abdeckplatte 12 und dem jeweiligen Heizelement 10 eine hier nicht dargestellte Isolierschicht vorgesehen ist. Abdeckplatte 12 und Isolierschicht verhindern einen Wärmeaustritt nach außen. In Kombination mit einer als Verbundwerkstoffplatte ausgebildeten Wärmeübergangsplatte 13 ist die thermische Leitfähigkeit der Heizelemente 10 besonders vorteilhaft. Hierdurch kann eine homogene Wärmeverteilung innerhalb des Paketaufbaus 1a, insbesondere innerhalb der Multilayerpresspakete 1b erzielt werden. Bei den hier verwendeten Heizelementen 10, den Flachheizkörpern, die vzw. als Mekanit-Flächenheizkörper ausgebildet sind, ist so eine optimale Beheizung der Wärmeübergangsplatten 13 und eine Erwärmung der Trennbleche 6 und der Multilayer 7 realisiert.

Aus den Fig. 2a bis 2c ist gut ersichtlich, dass die Heizelemente 10 elektrische Steckverbindungsanschlüsse 14 aufweisen. Hierzu weist die Presse 2 entsprechende korrespondierende Kontakte 15 auf. Hierbei können diese elektrischen Steckverbindungsanschlüsse 14 bzw. Kontakte 15 als Kontaktstecker und/oder Buchsen, also als eine Art "Male/Female"-Anschlüsse ausgebildet sein. Hierbei können die bereits im Stand der Technik existierenden Pressen 2 dann ohne großen Kostenaufwand nachgerüstet werden. Vzw. sind die entsprechenden Anschlüsse innerhalb von verschieden hier dargestellten Leisten 16 angeordnet und innerhalb einer Presse 2 an der Rückwand angeordnet.

Die Wärmeübergangsplatten 13, insbesondere die Edelstahlschichten 13b, weisen eine Oberflächenhärte von HRC 30 bis 50 auf, wobei an ihrer Oberfläche eine maximale Rauhigkeit von bis zu 70 µm besteht. Vzw. liegt die Wärmeleitfähigkeit der Wärmeübergangsplatten 13 im wesentlichen 200 W/m°K.

Die Heizelemente 10 weisen vzw. eine Leistung von bis zu 3,5 W/cm² auf und können bis zu einer maximalen Temperatur von bis zu 350° C hochgeheizt werden. Der Aufbau der Heizelemente 10 ist hier nicht im einzelnen dargestellt. Die Heizelemente 10, die als Flachheizkörper (sogenannte Mekanit-Flachheizkörper) ausgebildet sind, weisen aber einen Heizleiterträger, eine Deckisolierung aus speziellem Feinglimmer und Heizmekanit auf

Es erfolgt eine ideale Aufteilung der Heizleistung im Anwendungsfall durchaus auch mit unterschiedlichen Leistungszonen, aber über die gesamte Fläche. Mit dem erfindungsgemäßen Paketaufbau 1a ist also die Produktivität erhöht, insbesondere eine bessere Wärmeverteilung in den Multilayerpresspaketen 1b erzielt. Auch der Arbeitsprozess als solcher ist nicht mehr so zeitaufwendig, was wiederum eine Erhöhung der Produktivität zur Folge hat. Auch ist durch die elektrische Beheizbarkeit der Multilayerpresspakete 1b in den unterschiedlichen Etagen einer Etagenpresse es nunmehr möglich hier Multilayer unter unterschiedlichen Parametern herzustellen. Anders ausgedrückt die einzelnen Etagen werden entsprechend elektrisch anders angesteuert, nämlich vzw. mit anderen Temperaturen beheizt. Auch das Steuersystem ist entsprechend einfach Ein Schaltschrank-System kann installiert werden. Vorhandene Pressen müssen nur noch mit geringen Kosten umgerüstet werden, insbesondere die elektrischen Anschlüsse für die Heizelemente 10 müssen angeordnet werden. Mit den oben angegebenen Dickenverhältnissen bzw. Dickenbereichen, insbesondere mit den bevorzugt und idealerweise angegebenen Dicken der einzelnen Platten sind die im Stand der Technik derzeit existierenden Etagenpressen 2a mit einer wesentlich größeren Anzahl von Trennblechen 6 bzw. Multilayern 7 bestückbar, so dass eine höhere Produktivität erzielbar ist, nämlich insgesamt bis zu 40 Multilayer 7 angeordnet bzw. verpresst werden können, also mit der vierfachen Menge des im Stand der Technik bekannten Volumens. Im Einzelnen:

Bei dem erfindungsgemäßen Paketaufbau 1a entfällt der Einsatz von Presspolstern aufgrund der direkten elektrischen Beheizung mit Hilfe der Heizelemente 10, mit denen auch eine gute Wärmeverteilung innerhalb der Multilayerpresspakete 1b realisiert wird. Durch die spezielle Isolierung des Paketaufbaus 1a über die Abschlusselemente, nämlich über die Abdeckplatten 12 der Werkzeuge 11b bzw. 11c ist eine gute Wärmeverteilung innerhalb der Multilayerpresspakete 1b realisiert, da die Wärme überwiegend nur ins Innere der Multilayerpresspakete 1b, also auf die zu verpressenden Multilayer 7 abgeben wird. Es muss also bei den bereits im Stand der Technik existierenden Pressen 2 die vorhandenen Druckplatten 2b, 2c nicht mehr beheizt werden. Der Einsatz von Presspolstern entfällt. Bei einem Einsatz von drei Werkzeugen 11a bis 11c, so wie in den Fig. 2a bis 2c bzw. 3 dargestellt, ist jede Wärmequelle, also jedes Heizelement 10 nur noch für die Durchwärmung von wenigen Schichten zuständig. Hierdurch verkürzt sich die Zeit bis zum Erreichen der Harzumwandlungstemperatur in der Mitte des "Buches" auf ca. 25 % bei gleichzeitiger erheblicher Verbesserung der Oberflächenqualität, die durch den besseren und gleichmäßigeren Harzfluss erreicht wird. Hierdurch kann der Pressenzyklus von dem im Stand der Technik bekannten ca. 100 Minuten auf nunmehr ca. 30 Minuten verkürzt werden. Konnten im Stand der Technik bisher bei dem Einsatz von Trennblechen 6 mit 1,5 mm Edelstahlblechen und konventioneller Technologie auf einer 8-Etagenpresse, pro Etage 10 Multilayer in 100 Minuten, also insgesamt 80 Stück verpresst werden, so erhöht sich mit der erfindungsgemäßen Paketaufbau 1a die Panelzahl pro Buch auf 20 bei einer Halbierung der Presszeit. Also kommt es rechnerisch zu einer vierfach-höheren Leistung bei gleichzeitiger Qualitätsverbesserung.

Im Ergebnis sind daher die eingangs beschriebenen Nachteile daher vermieden und entscheidende Vorteile erzielt.

### Bezugszeichenliste:

- 1: Multilayerpaket
- 1a: Paketaufbau (Presspaketaufbau)
- 2: Presse
- 2a: Etagenpresse
- 2b, 2c: Druckplatten
- 3: Einschuböffnung
- 4: Werkzeug
- 5: Werkzeug
- 6: Trennblech
- 7: Multilayer
- 8: Presspolster
- 9: Kanäle
- 10: Heizelement
- 11a: erstes Werkzeug
- 11b: zweites Werkzeug
- 11c: drittes Werkzeug
- 12: Abdeckplatte
- 13: Wärmeübergangsplatte
- 13a: Aluminiumkern
- 13b: Edelstahlschichten
- 14: elektrischer Steckverbindungsanschluss
- 15: Kontakte
- 16: Leiste

## Patentansprüche

1. Presspaketaufbau (1a) für eine Presse (2) zum Verpressen von Multilayern (7) zum Einschub in die Einschuböffnung (3) einer Presse (2), wobei drei elektrisch beheizbare Werkzeuge (11a, 11b, 11c) und zwei Multilayerpresspakete (1b) vorgesehen sind, wobei ein erstes Werkzeug (11a) im wesentlichen mittig innerhalb des Presspaketaufbaues (1a) angeordnet ist, wobei ein zweites Werkzeug (11b) oben auf dem ersten Multilayerpresspaket (1b) und ein drittes Werkzeug (11c) unter dem zweiten Multilayerpresspaket (1b) jeweils als Abschlusselement des Presspaketaufbaus (1a) angeordnet ist, wobei jedes Werkzeug (11a, 11b, 11c) als Wärmeeinheit ausgebildet ist und jeweils mindestens ein elektrisch betreibbares Heizelement (10) aufweist, wobei die Heizelemente (10) als Flachheizkörper ausgebildet sind, wobei das erste Werkzeug (11a) gebildet ist durch zwei Wärmeübergangsplatten (13) und das zwischen diesen angeordnete Heizelement (10) und das zweite und dritte Werkzeug (11b, 11c) jeweils gebildet werden durch eine Abdeckplatte (12), eine Wärmeübergangsplatte (13) und das zwischen diesen angeordnete Heizelement (10), **dadurch gekennzeichnet, dass** die Abdeckplatten (12) als Stahlplatten und die Wärmeübergangsplatten (13) als Verbundwerkstoffplatten ausgebildet sind, wobei das jeweilige Werkzeug (11a, 11b, 11c) durch das zwischen der Abdeckplatte (12) und der Wärmeübergangsplatte (13) bzw. durch das zwischen den zwei Wärmeübergangsplatten (13) angeordnete Heizelement (10) als eine zusammenhängende Struktur ausgebildet ist, und dass jedes Werkzeug (11a, 11b, 11c) mindestens einen elektrischen Steckverbindungsanschluß (14) aufweist, die so ausgebildet sind, dass diese Steckverbindungsanschlüsse (14) mit Kontaktanschlüssen (15) an einer Presse (2) korrespondieren.

2. Presspaketaufbau nach Anspruch 1, **dadurch gekennzeichnet, dass** die Abdeckplatte (12) des Werkzeugs (11b, 11c) als Edelstahlplatte ausgebildet ist.

3. Presspaketaufbau nach einem der vorhergehenden Ansprüche, **dadurch gekennzeichnet, dass** das Heizelement (10) als Mekanit-Flächenheizkörper ausgebildet sind.

4. Presspaketaufbau nach einem der vorhergehenden Ansprüche, **dadurch gekennzeichnet, dass** die Verbundwerkstoffplatte (13) im Inneren einen Aluminiumkern (13a) und zwei äussere plattierte Edelstahlschichten (13b) aufweist.

5. Presspaketaufbau nach einem der vorhergehenden Ansprüche, **dadurch gekennzeichnet, dass** die Wärmeübergangsplatte (13) eine Oberflächenhärte von HRC 30 bis 50 aufweist.

6. Presspaketaufbau nach einem der vorhergehenden Ansprüche, **dadurch gekennzeichnet, dass** die Oberfläche der Wärmeübergangsplatte (13) eine maximale Rauhigkeit von bis zu 70 µm aufweist.

7. Presspaketaufbau nach einem der vorhergehenden Ansprüche, **dadurch gekennzeichnet, dass** die Wärmeleitfähigkeit der Wärmeübergangsplatte (13) im wesentlichen 200 W/m°K beträgt.

8. Presspaketaufbau nach einem der vorhergehenden Ansprüche, **dadurch gekennzeichnet, dass** durch das Heizelement (10) eine Leistung von bis zu 3,5 W/cm² und eine maximale Temperatur bis zu 350 °C gewährleistet ist.

9. Presspaketaufbau nach einem der vorhergehenden Ansprüche, **dadurch gekennzeichnet, dass** eine erste Ausführung der Wärmeübergangsplatte (13) eine Dicke von 4 bis 20 mm, vzw. von 6 bis 15 mm, insbesondere von 10 mm aufweist.

10. Presspaketaufbau nach einem der vorhergehenden Ansprüche 1-8, **dadurch gekennzeichnet, dass** eine zweite Ausführung der Wärmeübergangsplatte (13) eine Dicke von 1,5 bis 15 mm, vzw. von 3 bis 10 mm, insbesondere von 2,3 mm aufweist.

11. Presspaketaufbau nach einem der vorhergehenden Ansprüche, **dadurch gekennzeichnet, dass** die Abdeckplatte (12) eine Dicke von 3 bis 10 mm, vzw. 5 bis 8 mm, insbesondere 6 mm aufweist.

12. Presspaketaufbau nach einem der vorhergehenden Ansprüche, **dadurch gekennzeichnet, dass** bei der Wärmeübergangsplatte (13) das Verhältnis von Aluminium zu Stahl/Edelstahl im Bereich zwischen 50% zu 50%, vzw. im Bereich 60% zu 40%, insbesondere 80% bis 20% liegt.

13. Presspaketaufbau nach einem der vorhergehenden Ansprüche, **dadurch gekennzeichnet, dass** der Presspaketaufbau (1a) im wesentlichen von oben nach unten schichtenmässig sequentiell wie folgt strukturiert ist: das zweite Werkzeug (11b), mehrere durch Trennbleche (6) getrennte Multilayer (7), das erste Werkzeug (11a), mehrere durch Trennbleche (6) getrennte Multilayer (7) sowie das dritte Werkzeug (11c).

14. Presspaketaufbau nach Anspruch 13, **dadurch gekennzeichnet, dass** die Trennbleche (6) eine Dicke von 0,2 bis 1,5 mm, vzw. von 0,3 bis 1,0 mm, insbesondere 0,5 mm aufweisen.

15. Presspaketaufbau nach Ansprüche 13 oder 14, **dadurch gekennzeichnet, dass** die Trennbleche (6) bei einer Temperatur von im wesentlichen 180 °C eine Zugfestigkeit von mindestens Rm ≥ 500 MPa und/oder eine Dehngrenze von mindestens R_{p0,2} ≥ 470 MPa aufweisen.

16. Presspaketaufbau nach einem der vorhergehenden Ansprüche 13-15, **dadurch gekennzeichnet, dass** die Trennbleche (6) zusätzlich eine organische, anorganische oder metallische Beschichtung aufweisen.

17. Presspaketaufbau nach Anspruch 16, **dadurch gekennzeichnet, dass** die organische Beschichtung als Gleitmittel aufgetragen ist.

18. Presspaketaufbau nach Ansprüch 17, **dadurch gekennzeichnet, dass** das Gleitmittel auf Olefin-Basis hergestellt ist.

19. Presspaketaufbau nach Anspruch 18, **dadurch gekennzeichnet, dass** das Gleitmittel ein Polymer auf einer Poly-Olefin-Basis ist.

20. Presspaketaufbau nach einem der vorhergehenden Ansprüche 13-19**, dadurch gekennzeichnet, dass** die Trennbleche (6) als Stahlbleche, nicht aber als Edelstahlbleche ausgebildet sind und im wesentlichen folgende Anteile aufweisen: 0,03 bis 1,2 Gewichts-% C, vzw. 0,03 bis 0,1 Gewichts-% C, 0,2 bis 1,5 Gewichts-% Mn, vzw. 0,2 bis 0,5 Gewichts-% Mn sowie geringe Spuren von Phospor, Schwefel, Aluminium und/oder Silizium.

21. Presspaketaufbau nach einem der vorhergehenden Ansprüche 13-19, **dadurch gekennzeichnet, dass** die Trennbleche (6) als Aluminium-Legierungsbleche ausgebildet sind und im wesentlichen folgende Anteile aufweisen: mindestens 0,25 Gewichts-% Si, mindestens 0,4 Gewichts-% Fe, mindestens 0,05 Gewichts-% Mn, von 0,05 bis 5 Gewichts-% Mg, von 0,1 bis 8 Gewichts-% Zn, von -0,1 bis 2 Gewichts-% Cu sowie die restlichen Gewichts-% Al.

22. Presspaketaufbau nach Anspruch 21, **dadurch gekennzeichnet, dass** die als Aluminium-Legierungsbleche ausgebildeten Trennbleche (6) eine Zugfestigkeit von 300 bis 680 Mpa, vzw. 680 Mpa, und eine Dehngrenze Rp_{0,2} von im wesentlichen 70 % der Zugfestigkeit aufweisen.

23. Presspaketaufbau nach einem der vorhergehenden Ansprüche 13-19, **dadurch gekennzeichnet, dass** die Trennbleche (6) als harteloxiertes Aluminiumblech ausgebildet sind und eine beidseitige Harteloxierung von mindestens 1 µm Dicke aufweist.

24. Presspaketaufbau nach einem der vorhergehenden Ansprüche 13-19, **dadurch gekennzeichnet, dass** die Trennbleche (6) als Verbundwerkstoffplatte mit einem Aluminiumkern und zwei äusseren aufplattierten Stahl/Edelstahlschichten ausgeführt sind.

25. Presse (2, 2a) zur Verpressung bzw. Herstellung von Multilayern (7), insbesondere zur Verpressung eines Multilayerpresspaketes (1b), **dadurch gekennzeichnet, dass** mindestens ein Presspaketaufbau nach einem der Ansprüche 1 bis 24 in der Presse (2, 2a) angeordnet ist, und dass zu dem jeweiligen Heizelement (10) des jeweiligen Werkzeuges (11a, 11b, 11c) mindestens ein elektrischer Kontaktanschluß (15) vorgesehen ist.

26. Presse nach Anspruch 25, **dadurch gekenntzeichnet,** dass der Kontaktanschluss (15) bzw. die Kontaktanschlüsse (15) innerhalb einer Kontaktleiste (16) realisiert sind.

27. Presse nach einem der Ansprüche 25 oder 26, **dadurch gekennzeichnet, dass** der Kontaktanschluss (15) und/oder die Kontaktleiste (16) an der Rückwand der Einschuböffnung (3) angeordnet ist.

## Claims

1. Press packet assembly (1a) for a press (2) for the pressing of multilayer systems (7) for insertion into the insertion aperture (3) of a press (2), where three electrically heatable implements (11a, 11b, 11c) and two multilayer press packets (1b) are provided, where a first implement (11a) is arranged in essence centrally within the press packet assembly (1a), where a second implement (11b is arranged above on the first multilayer press packet (1b) and a third implement (11c) is arranged below the second multilayer press packet (1b) respectively as concluding element of the press packet assembly (1a), where each implement (11a, 11b, 11c) takes the form of heating unit and respectively has at least one electrically operable heating element (10), where the heating elements (10) take the form of flat heating elements, where the first implement (11a) is composed of two heat-transfer sheets (13) and of the heating element (10) arranged between these, and the second and third implement (11b, 11c) are respectively composed of a cover sheet (12), of a heat-transfer sheet (13) and of the heating element (10) arranged between these, **characterized in that** the cover sheets (12) take the form of steel sheets and the heat-transfer sheets (13) take the form of composite-material sheets, where by virtue of the heating element (10) arranged between the cover sheet (12) and the heat-transfer sheet (13) and, respectively, by virtue of the heating element (10) arranged between the two heat-transfer sheets (13) the respective implement (11a, 11b, 11c) takes the form of a coherent structure, and **in that** each implement (11a, 11b, 11c) has at least one electrical plug connection (14), the design of these being such that these plug connections (14) correspond with contact connections (15) on a press (2).

2. Press packet assembly according to Claim 1, **characterized in that** the cover sheet (12) of the implement (11b, 11c) takes the form of stainless steel sheet.

3. Press packet assembly according to any of the preceding claims, **characterized in that** the heating element (10) take the form of Mekanit flat heating element.

4. Press packet assembly according to any of the preceding claims, **characterized in that** the composite-material sheet (13) has an aluminium core (13a) in the interior and two exterior plated stainless steel layers (13b).

5. Press packet assembly according to any of the preceding claims, **characterized in that** the HRC surface hardness of the heat-transfer sheet (13) is 30 to 50.

6. Press packet assembly according to any of the preceding claims, **characterized in that** the maximal roughness of the surface of the heat-transfer sheet (13) is up to 70 µm.

7. Press packet assembly according to any of the preceding claims, **characterized in that** the thermal conductivity of the heat-transfer sheet (13) is in essence 200 W/m°K.

8. Press packet assembly according to any of the preceding claims, **characterized in that** the heating element (10) reliably provides power of up to 3.5 W/cm² and a maximal temperature up to 350°C.

9. Press packet assembly according to any of the preceding claims, **characterized in that** the thickness of a first embodiment of the heat-transfer sheet (13) is 4 to 20 mm, preferably 6 to 15 mm, in particular 10 mm.

10. Press packet assembly according to any of the preceding Claims 1-8, **characterized in that** the thickness of a second embodiment of the heat-transfer sheet (13) is 1.5 to 15 mm, preferably 3 to 10 mm, in particular 2.3 mm.

11. Press packet assembly according to any of the preceding claims, **characterized in that** the thickness of the cover sheet (12) is 3 to 10 mm, preferably 5 to 8 mm, in particular 6 mm.

12. Press packet assembly according to any of the preceding claims, **characterized in that** in the case of the heat-transfer sheet (13) the ratio of aluminium to steel/stainless steel is in the range between 50% to 50%, preferably in the range 60% to 40%, in particular 80% to 20%.

13. Press packet assembly according to any of the preceding claims, **characterized in that** the sequential layer structure of the press packet assembly (1a) in the downward direction is essentially as follows: the second implement (11b), a plurality of multilayer systems (7) separated by separating metal sheets (6), the first implement (11a) a plurality of multilayer systems (7) separated by separating metal sheets (6), and the third implement (11c).

14. Press packet assembly according to Claim 13, **characterized in that** the thickness of the separating metal sheets (6) is 0.2 to 1.5 mm, preferably 0.3 to 1.0 mm, in particular 0.5 mm.

15. Press packet assembly according to Claims 13 or 14, **characterized in that** at a temperature that is in essence 180°C the tensile strength Rm of the separating metal sheets (6) is at least ≥ 500 MPa and/or the proof strength Rp₀.₂ thereof is at least ≥ 470 MPa.

16. Press packet assembly according to any of the preceding Claims 13-15, **characterized in that** the separating metal sheets (6) additionally have an organic, inorganic or metallic coating.

17. Press packet assembly according to Claim 16, **characterized in that** the organic coating has been applied as lubricant.

18. Press packet assembly according to Claim 17, **characterized in that** the production process for the lubricant was olefin-based.

19. Press packet assembly according to Claim 18, **characterized in that** the lubricant is a polyolefin-based polymer.

20. Press packet assembly according to any of the preceding Claims 13-19, **characterized in that** the separating metal sheets (6) take the form of steel sheets, but not stainless steel sheets, and in essence have the following contents: 0.03 to 1.2% by weight of C, preferably 0.03 to 0.3% by weight of C, 0.2 to 1.5% by weight of Mn, preferably 0.2 to 0.5% by weight of Mn and small traces of phosphorus, sulphur, aluminium and/or silicon.

21. Press packet assembly according to any of the preceding Claims 13-19, **characterized in that** the separating metal sheets (6) take the form of aluminium alloy sheets and in essence have the following contents: at least 0.25% by weight of Si, at least 0.4% by weight of Fe, at least 0.05% by weight of Mn, 0.05 to 5% by weight of Mg, 0.1 to 8% by weight of Zn, and 0.1 to 2% by weight of Cu, the remaining % by weight being Al.

22. Press packet assembly according to Claim 21, **characterized in that** the tensile strength of the separating metal sheets (6) taking the form of aluminium alloy sheets is 300 to 680 MPa, preferably 680 MPa, and the proof strength Rp_{0.2} thereof is in essence 70% of the tensile strength.

23. Press packet assembly according to any of the preceding Claims 13-19, **characterized in that** the separating metal sheets (6) take the form of hard-anodized aluminium sheet and the thickness of the bilateral hard anodization thereof is at least 1 µm.

24. Press packet assembly according to any of the preceding Claims 13-19, **characterized in that** the separating metal sheets (6) take the form of composite-material sheet with an aluminium core and two exterior steel/stainless steel layers applied by plating.

25. Press (2, 2a) for the pressing and, respectively, production of multilayer systems (7), in particular for the pressing of a multilayer press packet (1b), **characterized in that** at least one press packet assembly according to any of Claims 1 to 24 is arranged in the press (2, 2a), and **in that** there is at least one electrical contact connection (15) provided to the respective heating element (10) of the respective implement (11a, 11b, 11c).

26. Press according to Claim 25, **characterized in that** the contact connection(s) (15) is/are realised within a contact strip (16).

27. Press according to either of Claims 25 and 26, **characterized in that** the contact connection (15) and/or the contact strip (16) is arranged at the back wall of the insertion aperture (3).

## Revendications

1. Ensemble paquet de presse (1a) pour une presse (2) pour comprimer des circuits imprimés multicouches (7), destiné à une insertion dans l'ouverture d'insertion (3) d'une presse (2), trois outils chauffants électriques (11a, 11b, 11c) et deux paquets de presse multicouches (1b) étant prévus, un premier outil (11a) étant agencé essentiellement en centre dans l'ensemble paquet de presse (1a), un deuxième outil (11b) étant agencé sur le premier paquet de presse multicouche (1b) et un troisième outil (11c) sous le deuxième paquet de presse multicouche (1b), à chaque fois en tant qu'élément de fermeture de l'ensemble paquet de presse (1a), chaque outil (11a, 11b, 11c) étant configuré sous la forme d'une unité chauffante et comprenant à chaque fois au moins un élément chauffant opérable électriquement (10), les éléments chauffants (10) étant configurés sous la forme de corps chauffants plats, le premier outil (11a) étant formé par deux plaques de transfert de chaleur (13) et l'élément chauffant (10) agencé entre celles-ci, et le deuxième et le troisième outil (11b, 11c) étant chacun formés par une plaque de recouvrement (12), une plaque de transfert de chaleur (13), et l'élément chauffant (10) agencé entre celles-ci, **caractérisé en ce que** les plaques de recouvrement (12) sont configurées sous la forme de plaques en acier et les plaques de transfert de chaleur (13) sous la forme de plaques en un matériau composite, chaque outil (11a, 11b, 11c) étant configuré sous la forme d'une structure cohérente par l'élément chauffant (10) agencé entre la plaque de recouvrement (12) et la plaque de transfert de chaleur (13) ou entre les deux plaques de transfert de chaleur (13), et **en ce que** chaque outil (11a, 11b, 11c) comprend au moins un raccord de connecteur électrique (14), qui est configuré de sorte que ces raccords de connecteur (14) correspondent à des raccords de contact (15) sur une presse (2).

2. Ensemble paquet de presse selon la revendication 1, **caractérisé en ce que** la plaque de recouvrement (12) de l'outil (11b, 11c) est configurée sous la forme d'une plaque en acier inoxydable.

3. Ensemble paquet de presse selon l'une quelconque des revendications précédentes, **caractérisé en ce que** l'élément chauffant (10) sont configuré sous la forme d'un corps chauffant plat Mekanit.

4. Ensemble paquet de presse selon l'une quelconque des revendications précédentes, **caractérisé en ce que** la plaque en matériau composite (13) comprend à l'intérieur un noyau en aluminium (13a) et deux couches extérieures plaquées en acier inoxydable (13b).

5. Ensemble paquet de presse selon l'une quelconque des revendications précédentes, **caractérisé en ce que** la plaque de transfert de chaleur (13) présente une dureté de surface HRC de 30 à 50.

6. Ensemble paquet de presse selon l'une quelconque des revendications précédentes, **caractérisé en ce que** la surface de la plaque de transfert de chaleur (13) présente une rugosité maximale de jusqu'à 70 µm.

7. Ensemble paquet de presse selon l'une quelconque des revendications précédentes, **caractérisé en ce que** la conductivité thermique de la plaque de transfert de chaleur (13) est essentiellement de 200 W/m·K.

8. Ensemble paquet de presse selon l'une quelconque des revendications précédentes, **caractérisé en ce que** l'élément chauffant (10) assure une puissance de jusqu'à 3,5 W/cm² et une température maximale de jusqu'à 350°C.

9. Ensemble paquet de presse selon l'une quelconque des revendications précédentes, **caractérisé en ce qu'**une première configuration de la plaque de transfert de chaleur (13) présente une épaisseur de 4 à 20 mm, de préférence de 6 à 15 mm, notamment de 10 mm.

10. Ensemble paquet de presse selon l'une quelconque des revendications 1 à 8 précédentes, **caractérisé en ce qu'**une seconde configuration de la plaque de transfert de chaleur (13) présente une épaisseur de 1,5 à 15 mm, de préférence de 3 à 10 mm, notamment de 2,3 mm.

11. Ensemble paquet de presse selon l'une quelconque des revendications précédentes, **caractérisé en ce que** la plaque de recouvrement (12) présente une épaisseur de 3 à 10 mm, de préférence de 5 à 8 mm, notamment de 6 mm.

12. Ensemble paquet de presse selon l'une quelconque des revendications précédentes, **caractérisé en ce que**, dans la plaque de transfert de chaleur (13), le rapport entre l'aluminium et l'acier/acier inoxydable se situe dans la plage de 50 % sur 50 %, de préférence dans la plage de 60 % sur 40 %, notamment de 80 % sur 20 %.

13. Ensemble paquet de presse selon l'une quelconque des revendications précédentes, **caractérisé en ce que** l'ensemble paquet de presse (1a) présente essentiellement la structure séquentielle suivante du haut vers le bas en termes de couches : le deuxième outil (11b), plusieurs circuits imprimés multicouches (7) séparés par des plaques de séparation (6), le premier outil (11a), plusieurs circuits imprimés multicouches (7) séparés par des plaques de séparation (6), et le troisième outil (11c).

14. Ensemble paquet de presse selon la revendication 13, **caractérisé en ce que** les plaques de séparation (6) présentent une épaisseur de 0,2 à 1,5 mm, de préférence de 0,3 à 1,0 mm, notamment de 0,5 mm.

15. Ensemble paquet de presse selon les revendications 13 ou 14, **caractérisé en ce que** les plaques de séparation (6) présentent à une température d'essentiellement 180°C une résistance à la traction d'au moins Rm ≥ 500 MPa et/ou une limite d'allongement d'au moins Rp_{0,2} ≥ 470 MPa.

16. Ensemble paquet de presse selon l'une quelconque des revendications 13 à 15 précédentes, **caractérisé en ce que** les plaques de séparation (6) comprennent en outre un revêtement organique, inorganique ou métallique.

17. Ensemble paquet de presse selon la revendication 16, **caractérisé en ce que** le revêtement organique est appliqué sous la forme d'un lubrifiant.

18. Ensemble paquet de presse selon la revendication 17, **caractérisé en ce que** le lubrifiant est fabriqué à base d'oléfine.

19. Ensemble paquet de presse selon la revendication 18, **caractérisé en ce que** le lubrifiant est un polymère à base de polyoléfine.

20. Ensemble paquet de presse selon l'une quelconque des revendications 13 à 19 précédentes, **caractérisé en ce que** les plaques de séparation (6) sont configurées sous la forme de plaques en acier, mais toutefois pas sous la forme de plaques en acier inoxydable, et présentent essentiellement les proportions suivantes : 0,03 à 1,2 % en poids de C, de préférence 0,03 à 0,1 % en poids de C, 0,2 à 1,5 % en poids de Mn, de préférence 0,2 à 0,5 % en poids de Mn, et des petites traces de phosphore, soufre, aluminium et/ou silicium.

21. Ensemble paquet de presse selon l'une quelconque des revendications 13 à 19 précédentes, **caractérisé en ce que** les plaques de séparation (6) sont configurées sous la forme de plaques en alliage d'aluminium et présentent essentiellement les proportions suivantes : au moins 0,25 % en poids de Si, au moins 0,4 % en poids de Fe, au moins 0,05 % en poids de Mn, de 0,05 à 5 % en poids de Mg, de 0,1 à 8 % en poids de Zn, de 0,1 à 2 % en poids de Cu, et les % en poids résiduels d'Al.

22. Ensemble paquet de presse selon la revendication 21, **caractérisé en ce que** les plaques de séparation (6) configurées sous la forme de plaques en alliage d'aluminium présentent une résistance à la traction de 300 à 680 MPa, de préférence de 680 MPa, et une limite d'allongement Rp_{0,2} d'essentiellement 70 % de la résistance à la traction.

23. Ensemble paquet de presse selon l'une quelconque des revendications 13 à 19 précédentes, **caractérisé en ce que** les plaques de séparation (6) sont configurées sous la forme de plaques en aluminium anodisées dures et présente une anodisation dure des deux côtés d'au moins 1 µm d'épaisseur.

24. Ensemble paquet de presse selon l'une quelconque des revendications 13 à 19 précédentes, **caractérisé en ce que** les plaques de séparation (6) sont configurées sous la forme de plaques en matériau composite comprenant un noyau en aluminium et deux couches extérieures plaquées en acier/acier inoxydable.

25. Presse (2, 2a) pour la compression ou la fabrication de circuits imprimés multicouches (7), notamment pour la compression d'un paquet de presse multicouche (1b), **caractérisée en ce qu'**au moins un ensemble paquet de presse selon l'une quelconque des revendications 1 à 24 est agencé dans la presse (2, 2a), et **en ce qu'**au moins un raccord de contact électrique (15) est prévu pour chaque élément chauffant (10) de chaque outil (11a, 11b, 11c).

26. Presse selon la revendication 25, **caractérisée en ce que** le raccord de contact (15) ou les raccords de contact (15) sont réalisés dans une réglette de contacts (16).

27. Presse selon l'une quelconque des revendications 25 ou 26, **caractérisée en ce que** le raccord de contact (15) et/ou la réglette de contacts (16) est agencé sur la paroi arrière de l'ouverture d'insertion (3).
